# EUROPEAN PATENT SPECIFICATION

(11) **EP 0 482 945 B1**
(45) Date of publication and mention of the grant of the patent: **22.05.1996**
(21) Application number: 91309887.7
(22) Date of filing: 25.10.1991
(51) Int. Cl.: H04N 5/92, H04N 5/922

(54) **De-emphasis and re-emphasis of high frequencies in a video signal**
Vor- und Nachverzerrung der Höhen-Frequenzen eines Videosignals
Désaccentuation et accentuation des fréquences élevées dans un signal vidéo

(30) Priority: 26.10.1990 US 604493
(43) Date of publication of application: 29.04.1992
(60) Divisional application: 95116314.6
(73) Proprietor: SAMSUNG ELECTRONICS CO., LTD., Suwon-City, Kyounggi-Do 441-370 (KR)
(72) Inventor: Strolle, Christopher H., Glenside, Pennsylvania 19038 (US); Wedam, Werner F., Lawrenceville, New Jersey 08648 (US)
(74) Representative: Stanley, David William

(56) References cited:
- EP-A- 0 015 499
- DE-B- 1 230 467
- US-A- 4 831 463

## Description

The present invention relates to deemphasis and reemphasis of high frequencies in a video signal and preferred embodiments of the invention aim to provide systems for transmitting a wide bandwidth luminance signal through a narrow bandwidth channel in a backwards compatible manner.

In present video cassette recorder (VCR) systems, a relatively wideband video signal is recorded on a relatively narrowband medium, the video tape. This is done by bandwidth limiting the recorded luminance signal before recording it (and the chrominance signal) on the video tape. This bandwidth limiting results in a degraded image when the previously recorded signal is reproduced and displayed.

Various techniques have been developed to enable the full bandwidth luminance signal to be recorded on the narrowband video tape. One of these techniques involves folding a high frequency portion of the luminance signal into an unused part of the low frequency portion of its spectrum, a technique called folding. This folded luminance signal is combined with the chrominance component of the video signal, and the combined signal recorded on the video cassette. The combined signal contains all the information present in the full bandwidth video signal, but occupies (along with the chrominance signal) a bandwidth no wider than the relatively narrow bandwidth of the standard video tape. The previously recorded full bandwidth video signal is subsequently regenerated during playback by separating the chrominance signal from the folded luminance signal, unfolding the folded luminance signal and recombining the chrominance signal with the restored full bandwidth luminance signal.

One problem with VCRs utilizing folding techniques is that a video cassette which has been recorded using the folding technique is not backwards compatible with VCRs without the unfolding playback circuitry. That is, a video cassette on which a folded full bandwidth video signal is recorded can not be played-back on a VCR which does not have the unfolding circuitry in the playback path without introducing objectionable artifacts.

A previous solution to this problem has been to lower the amplitude of the high frequency portion of the luminance signal, before it is folded into the low frequency component, a technique called deemphasis. The deemphasized folded luminance signal is separated from the chrominance signal. The separated luminance signal is then unfolded, and the amplitude of the high frequency portion is increased to restore it to substantially its original level, a technique called reemphasis. If such a video tape is played back on a VCR which does not have the unfolding and reemphasis circuitry, the artifacts caused by the presence of the high frequency portion of the luminance signal within the low frequency portion are not objectionable, because the amplitude of high frequency portion of the luminance signal, which causes the artifacts, was reduced prior to folding to a non-objectionable level.

In our co-pending European Patent Application EP 91 307 342.5 filed 9 August 1991, (publication no. EP-A-0 471 517, and claiming priority from U.S. Patent Application serial number 07/569,029 entitled AN IMPROVED VIDEO SIGNAL RECORDING SYSTEM, filed 8/17/90 by Strolle et al (DNC-90-002), a video signal recording system is described which includes an adaptive deemphasis circuit in the luminance signal record path and an adaptive reemphasis circuit in the playback path. The adaptive deemphasis circuit in the above mentioned patent application (a copy of which is filed with the present application) includes circuitry for detecting the level of the high frequency portion of the luminance signal, and circuitry for variably reducing the level of the high frequency portion in response to the detected signal level. If the level of the high frequency portion of the luminance signal is high, then the level of the high frequency portion is reduced by a maximum amount; if the level is low, then the level is reduced by a minimum amount.

The adaptive reemphasis circuit in the playback path of the above mentioned patent application performs substantially the inverse operation. This adaptive reemphasis circuit includes circuitry for detecting the level of the high frequency portion of the unfolded luminance signal, and circuitry for variably increasing the level of the high frequency portion in response to the detected level. If the level of the high frequency portion of the unfolded luminance signal is relatively high, then the level is boosted by the maximum amount; if the level is relatively low, then the level is boosted by the minimum amount.

Because when the level of the high frequency portion of the luminance signal is high it is reduced by a maximum amount, and when it is low it is reduced by a minimum amount, the level of the high frequency portion is controlled to always be at about the same level. This deemphasized luminance signal is then folded, recorded, played back and unfolded. All of these steps may introduce noise. If the introduced noise changes the detected level of the high frequency portion, then the reemphasis function may not be substantially the inverse of the deemphasis function.

It is desirable to produce the highest quality image possible in a VCR with unfolding circuitry in the playback path, while maintaining backward compatibility with VCRs without the unfolding circuitry in the playback path. This requires that the amount by which the high frequency portion of the luminance signal is reduced in the record path substantially corresponds to the amount by which the high frequency portion of the luminance signal is increased in the playback path. The solution described in the above mentioned patent application included an adaptive reemphasis circuit in the playback path. Such a circuit may respond unfavourably to noise introduced in the record and playback process. The previous solution described in the above mentioned patent application does not include means for coring a high frequency portion of the reduced level luminance signal.

According to a first aspect of the present invention, there is provided a system for reproducing a luminance signal from a medium containing a previously recorded luminance signal, said previously recorded luminance signal (Y) comprising attenuated high frequencies folded into a lower frequency portion of its spectrum, the system comprising:
means for recovering said recorded luminance signal from said medium;
means for unfolding said high frequency portion of said luminance signal recovered from said medium;
means for separating a high frequency portion of said luminance signal from a low frequency portion;
a coring circuit for coring said high frequency portion; wherein said coring circuit only passes signals exceeding a predetermined threshold in either signal direction; and
means for boosting the level of said cored high frequency portion by a scaling factor to produce said luminance signal (Y) whereby the scaled high frequency portion, when recombined with the low frequency portion of said luminance signal (Y), produces substantially the full bandwidth re-emphasized luminance signal.

Preferably, said separating means comprises:
a high pass filter responsive to said recovered luminance signal to form said high frequency portion;
a subtractor for subtracting said high frequency portion from said recovered luminance signal to form said low frequency portion; and
an adder for adding the cored and scaled high frequency portion together with the output of said subtractor for producing the full bandwidth re-emphasized luminance signal (Y).

Preferably, said coring circuit further comprises a threshold control input terminal and only passes signals exceeding a threshold which varies in response to a signal at said threshold control input terminal; and said system further comprises a user threshold input terminal coupled to said threshold control input terminal.

Preferably, said boosting means comprises a multiplier for multiplying said high frequency portion by said scaling factor, wherein said scaling factor is fixed at a predetermined level.

Preferably, said boosting means comprises a multiplier for multiplying said high frequency portion by said scaling factor and a gain adjust input terminal for producing said scaling factor in response to a user input.

According to a second aspect of the present invention, there is provided a system having a recording portion for recording a luminance signal on a recording medium and a reproducing portion for playing back said luminance signal from a recording medium wherein said luminance signal comprises a high frequency portion which is folded back into the low frequency portion, wherein said recording portion comprises:
means for adaptively reducing the level of a high frequency portion of said luminance signal whereby said adaptive reducing means reduces the level of said high frequency portion by an amount variable in response to a control signal, which control signal is responsive to the level of said high frequency portion; and
means for recording said luminance signal on said medium:
and said reproducing portion comprises:
means for reproducing said luminance signal from said medium; and
means for non-adaptively boosting the level of said high frequency portion of said reproduced luminance signal to produce said luminance signal, whereby said non-adaptive boosting means boosts the level of said high frequency portion by a predetermined amount.

Preferably, said reproducing portion has any of the features mentioned above in relation to the first aspect of the invention.

Preferably, said adaptive reducing means comprises:
means for separating a high frequency portion from said luminance signal; and
means responsive to said high frequency portion, for producing a control signal only if the level of said high frequency portion exceeds a predetermined threshold level.

Preferably, said adaptive reducing means comprises:
means for separating a high frequency portion of said luminance signal from a low frequency portion;
means for generating a control signal representative of the level of said high frequency portion;
means for scaling said high frequency portion by a scaling factor related to said control signal; and
means for combining said scaled high frequency portion and said low frequency portion to form said reduced level luminance signal.

Preferably, said separating means comprises a high pass filter.

Preferably, said control signal producing means comprises:
a rectifier, responsive to said high frequency portion;
a corer coupled to said rectifier, for responding to signals exceeding said threshold level; and
a low pass filter, coupled to said corer, for producing said control signal.

Preferably, said separating means comprises:
a subtractor for subtracting said high frequency portion from said luminance signal to produce said low frequency portion.

Preferably, said scaling means comprises a multiplier for multiplying said high frequency portion by said scaling factor.

Preferably, said scaling means further comprises a function circuit, responsive to said control signal, for generating said scaling factor.

Preferably, said control signal generator produces a signal K having a value which varies from 0, when the level of said high frequency portion is relatively small, to 1/2, when the level of said high frequency portion is relatively large, and having intermediate values at intermediate levels of said high frequency portion; and said function circuit produces a scaling factor 1-K having a value which varies from 1, when the value of said control signal K is 0, to 1/2, when the value of said control signal is 1/2, and having intermediate values at intermediate values of said control signal K.

Preferred embodiments of video signal recording systems in accordance with principles of the present invention may be economical to build because of the simple circuitry. A predetermined amount of boost for the high frequency portion of the luminance signal may be selected to provide an image which is pleasing to the viewer, causes no noticeable artifacts and provides good noise performance.

For a better understanding of the invention, and to show how the same may be carried into effect, reference will now be made, by way of example, to the accompanying diagrammatic drawings, in which:
Figure 1 is a block diagram of one example of a portion of a video signal recording/playback system in accordance with principles of the present invention;
Figure 2 is a block diagram of an example of an adaptive deemphasis circuit and control signal generator which may be used in the video signal recording/playback system illustrated in Figure 1;
Figure 3 is a set of related waveform diagrams which are useful in understanding the operation of the adaptive deemphasis circuit illustrated in Figure 2; and
Figure 4 is a block diagram of an example of a reemphasis circuit which may be used in conjunction with the deemphasis circuit illustrated in Figure 2.

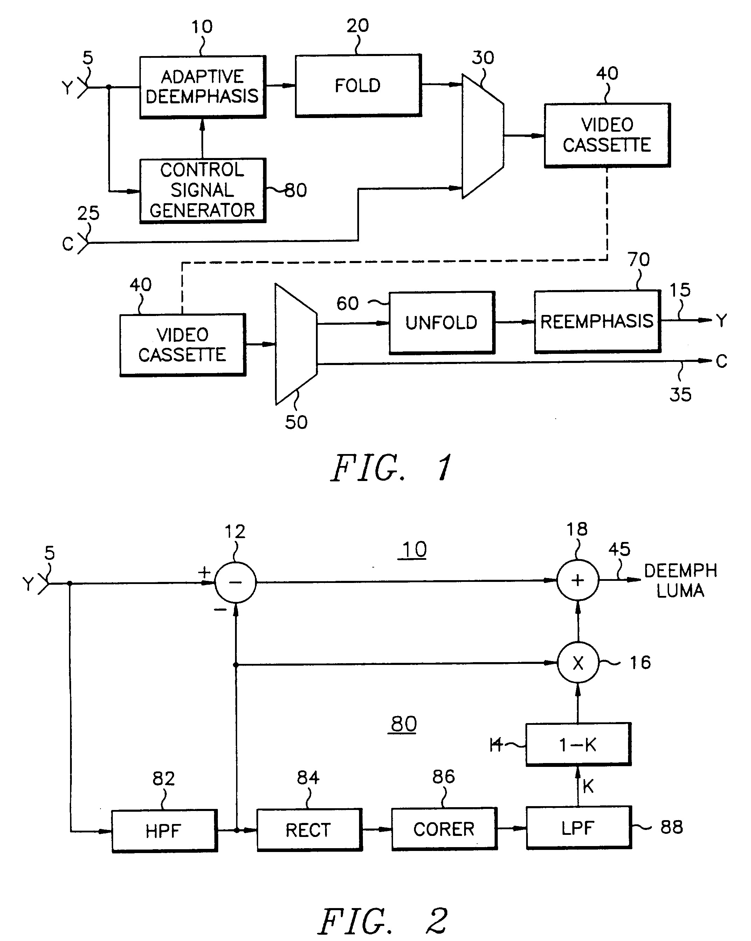

In Figure 1, a luminance signal input terminal 5 is coupled to a source (not shown) of a full bandwidth luminance signal. For example, luminance signal input terminal 5 may be coupled to the luminance output terminal of a luminance-chrominance separator in the video signal recording/playback system or to the luminance output terminal of a video camera.

Luminance signal input terminal 5 is coupled to a signal input terminal of an adaptive deemphasis circuit 10 and an input terminal of a control signal generator 80. A control signal output terminal of control signal generator 80 is coupled to a control signal input terminal of the adaptive deemphasis circuit 10. An output terminal of the adaptive deemphasis circuit 10 is coupled to an input terminal of a folding circuit 20. An output terminal of folding circuit 20 is coupled to a luminance signal input terminal of a combining circuit 30. An output terminal of combining circuit 30 is coupled to a mechanism for recording the combined signal on a recording medium. The recording mechanism and the medium are made up of well known elements and are represented herein by a video cassette 40.

A chrominance signal input terminal 25 is coupled to a source (not shown) of a chrominance signal. For example, chrominance signal input terminal 25 may be coupled to the chrominance output terminal of the luminance-chrominance separator in the video signal recording/playback system or to the chrominance output terminal of the video camera. Chrominance signal input terminal 25 is coupled to a chrominance signal input terminal of combining circuit 30.

The video cassette 40 also represents known elements making a playback mechanism for retrieving the previously recorded signal from the magnetic medium. Video cassette 40 is coupled to an input terminal of a signal separator 50. A luminance signal output terminal of signal separator 50 is coupled to an input terminal of an unfolding circuit 60. An output terminal of unfolding circuit 60 is coupled to a signal input terminal of a reemphasis circuit 70. An output terminal of reemphasis circuit 70 is coupled to luminance signal output terminal 15. Luminance signal output terminal 15 is coupled to a utilization means (not shown) for the reconstructed full bandwidth luminance signal from the reemphasis circuit 70. The utilization means may, for example, be a luminance-chrominance signal combiner for generating a composite video signal or may be the luminance signal input terminal of a high resolution television monitor.

A chrominance signal output terminal of separating circuit 50 is coupled to a chrominance signal output terminal 35. Chrominance signal output terminal 35 may be coupled to a utilization circuit for the chrominance signal. For example, the utilization circuit may be the luminance-chrominance signal combiner for generating a composite video signal or may be the chrominance signal input terminal of the high resolution television monitor.

It will be understood by one skilled in the art of video signal recording/playback systems that elements other than those illustrated in Figure 1 must be present in a recording/playback system. One skilled in the art would understand where these elements should be placed and how they should be interconnected. For clarity, these elements have been omitted from Figure 1, and will not be discussed in detail below.

In operation, the control signal generator 80 produces a control signal which represents the level of the high frequency portion of the full bandwidth luminance signal. The control signal input is coupled to the control signal output terminal of the adaptive deemphasis circuit 10. The adaptive deemphasis circuit 10 operates to variably decrease the level of the high frequency portion of the full bandwidth video signal in response to the control signal from the control signal generator 80. The adaptive deemphasis circuit 10 and control signal generator 80 are discussed in detail below.

The high frequency portion of the deemphasized luminance signal from the adaptive deemphasis circuit 10 is then folded into the low frequency portion in folding circuit 20. Our above mentioned European Patent Application EP 91 307 342.5 describes an exemplary folding circuit which may be used as the folding circuit 20 in Figure 1.

The folded deemphasized luminance signal from folding circuit 20 and the chrominance signal from chrominance signal input terminal 25 are combined in a known manner in combining circuit 30. The chrominance signal is recorded in a spectral region below the spectral region in which the folded deemphasized luminance signal is recorded and the combined luminance signal and chrominance signal occupies a bandwidth which is less than the bandwidth of the magnetic medium.

Upon playback, the signal from video cassette 40 is processed by separating circuit 50 in a known manner. In separating circuit 50, the chrominance signal is separated from the folded deemphasized luminance signal. The played back folded luminance signal is supplied to the unfolding circuit and the chrominance signal is supplied to the chrominance signal output terminal 35.

Unfolding circuit 60 unfolds the deemphasized high frequency portion of the luminance signal from the low frequency portion, and regenerates the deemphasized full bandwidth luminance signal. This unfolded deemphasized full bandwidth luminance signal is supplied to the signal input terminal of the reemphasis circuit 70. The reemphasis circuit 70 boosts the high frequency portion of the luminance signal by a predetermined amount. The output of the reemphasis circuit 70 is a full bandwidth luminance signal in which the high frequency portion has been restored to substantially the correct level.

Figure 2 is a block diagram of an example of an adaptive deemphasis circuit 10 and control signal generator 80 which may be used in the video signal recording/playback system illustrated in Figure 1. In Figure 2, input terminal 5 corresponds to input terminal 5 of Figure 1. Input terminal 5 is coupled to an input terminal of a high pass filter (HPF) 82 and to a minuend input terminal of a subtractor 12. An output terminal of subtractor 12 is coupled to an input terminal of an adder 18. An output terminal of adder 18 is coupled to an output terminal 45. Output terminal 45 is coupled to the input terminal of folding circuit 20 (of Figure 1).

An output terminal of HPF 82 is coupled to a subtrahend input terminal of subtractor 12, to a first input terminal of a multiplier 16, and to an input terminal of a rectifier 84. An output terminal of rectifier 84 is coupled to an input terminal of a corer 86. An output terminal of corer 86 is coupled to an input terminal of a low pass filter (LPF) 88. An output terminal of LPF 88 produces a control signal K, and is coupled to an input terminal of a 1-K function circuit 14. An output terminal of 1-K function circuit 14 is coupled to a second input terminal of multiplier 16. An output terminal of multiplier 16 is coupled to a second input terminal of adder 18.

One skilled in the art will understand that delay elements will be required at various locations in Figure 2, and will understand where these delay elements should be placed and how long the delay period should be. For clarity, these delay elements are omitted from Figure 2, and will not be discussed in detail below.

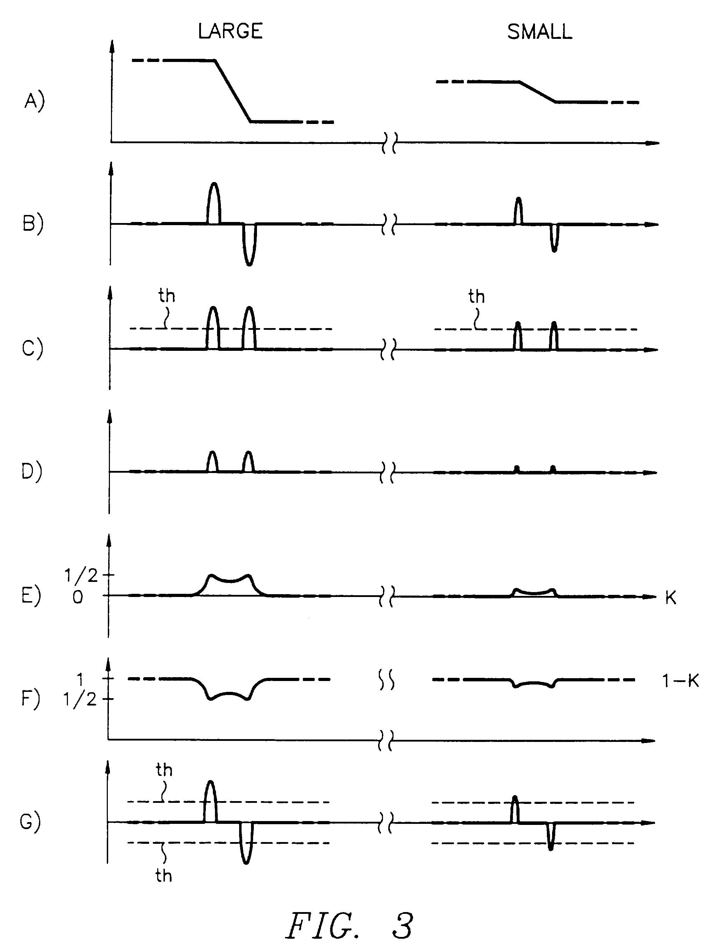

The operation of the adaptive deemphasis circuit 10 and the control signal generator 80 may be better understood by referring to the waveform diagrams illustrated in Figure 3. In operation, HPF 82 and subtractor 12 separate the high frequency portion from the low frequency portion of the luminance signal. The output signal from HPF 82 contains the high frequency portion of the luminance signal. The high frequency portion of the luminance signal is subtracted from the full bandwidth luminance signal in subtractor 12, leaving only the low frequency portion.

The low frequency portion is supplied to adder 18 for combination with an attenuated high frequency portion to form the deemphasized luminance signal. The high frequency portion may contain luminance information representing vertical edges. Figure 3A illustrates two examples of vertical edges. On the left hand side, a large amplitude vertical edge is illustrated and on the right hand side, a small vertical edge is illustrated. Figure 3B illustrates the signal at the output terminal of the HPF 82. This signal is rectified by rectifier 84, and Figure 3C illustrates the signal at the output terminal of rectifier 84.

Corer 86 operates to eliminate the effect of low amplitude edges on the deemphasis function. Corer 86 operates as a threshold circuit. If the value of the input signal is less than the threshold value, then a zero valued signal is produced. If the value of the input signal is greater than the threshold value, then the value of the output signal is the value of the input signal less the threshold value. Figure 3D illustrates the signal at the output terminal of corer 86. Referring to Figure 3C, the dotted line illustrates the threshold value. In Figure 3D, only the portion of rectified signal illustrated in Figure 3C which exceeds the threshold value passes through the corer circuit 86, producing the signal illustrated in Figure 3D.

The output signal from corer 86 is passed through LPF 88 to produce control signal K illustrated in Figure 3E. The LPF 88 operates to spread the control signal so that it changes gradually in the vicinity of the vertical edge. The control signal K is scaled to vary between 0, when the level of the high frequency portion of the luminance signal is small, and 1/2, when the level of the high frequency portion is large. The control signal K is then subtracted from the value 1 in the 1-K function circuit 14, producing the signal illustrated in Figure 3F. The 1-K function circuit 14 may be constructed in known manner of analog or digital arithmetic elements, or a look-up table, in the case of a digital implementation. This signal varies between 1, when the level of the high frequency portion of the luminance signal is small, to 1/2 when the level of the high frequency portion is large. This signal is supplied to one input terminal of multiplier 16. Multiplier 16 scales the level of the high frequency portion of the luminance signal by multiplying the high frequency portion of the luminance signal by the 1-K signal. This scaled high frequency portion is then added to the low frequency portion of the luminance signal to form the deemphasized luminance signal.

When the level of the high frequency portion is high, the scaling factor is 1/2 and the level of the high frequency portion is halved. When the level of the high frequency portion is low, the scaling factor is nearly 1 and the level of the high frequency portion is passed through unattenuated. At intermediate levels of the high frequency portion of the luminance signal, the scaling factor is intermediate between 1/2 and 1 and the level of the high frequency portion in the deemphasized luminance signal is at a corresponding intermediate value.

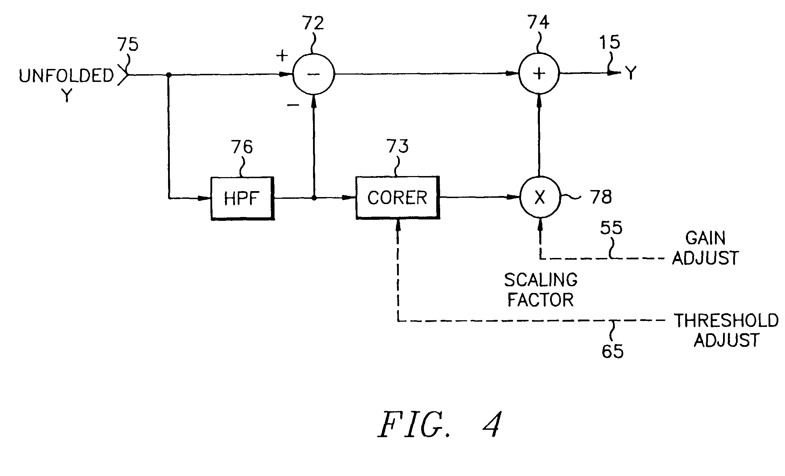

Figure 4 is a block diagram of the reemphasis circuit 70 illustrated in Figure 1. In Figure 4, an input terminal 71 is coupled to the output terminal of the unfolding circuit 60 (of Figure 1). Input terminal 71 is coupled to a minuend input terminal of a subtractor 72 and to an input terminal of a high pass filter (HPF) 76. An output terminal of subtractor 72 is coupled to a first input terminal of adder 74. An output terminal of adder 74 is coupled to output terminal 15. Output terminal 15 corresponds to the output terminal 15 of Figure 1.

An output terminal of HPF 76 is coupled to a subtrahend input terminal of subtractor 72 and to an input terminal of corer 73. An output terminal of corer 73 is coupled to a first input terminal of multiplier 78. A source of a scaling factor is coupled to a second input terminal of multiplier 78.

In operation, HPF 76 and subtractor 72 separate the high frequency portion of the reproduced unfolded deemphasized luminance signal from the low frequency portion. The output of the HPF 76 is the high frequency portion, which, when subtracted from the full bandwidth unfolded deemphasized luminance signal in subtractor 72, leaves only the low frequency portion.

The high frequency portion of the unfolded deemphasized luminance signal is subjected to a coring operation in corer 73. Corer 73 operates as a bidirectional threshold circuit (as opposed to corer 86 (of Figure 2) which operates only in the positive signal direction). If the value of the input signal is closer to zero than a predetermined threshold value, then a zero valued signal is produced. If the value of the input signal is farther from zero than the threshold value, then the value of the output signal is the value of the input signal less the threshold value. Figure 3G illustrates the signal at the input terminal of corer 73 and the positive and negative thresholds. In Figure 3G, only the portion of input signal which exceeds the threshold value passes through the corer circuit.

This coring operation removes low amplitude noise in the high frequency portion resulting from the recording and playback process. Such noise is particularly noticeable in areas of the image where there is no detail. This coring operation does not affect the reproduction of the original luminance signal in areas of the image where the level of the high frequency portion was small, because the adaptive deemphasis did not reduce the amplitude of the high frequency portion in these areas. Therefore, the level of the high frequency portion in these areas will tend to remain higher than the noise.

Alternatively, a user threshold adjust input terminal 65 may be coupled to a threshold input terminal of corer 73, as illustrated in phantom in Figure 4. A threshold adjust signal, supplied to the threshold adjust input terminal 65, under the control of a user, will adjust the threshold of corer 73. If the threshold is adjusted too low, then noise will appear in areas of the image having no detail; if the threshold is adjusted too high, then only the highest amplitude detail will be provided in the image, and the image may assume a smeared look. The user may adjust the threshold to produce the most pleasing image.

The cored high frequency portion of the deemphasized luminance signal is scaled by multiplier 78. The scale factor is supplied by the scaling factor input terminal of multiplier 78. This scaling factor may be fixed at a predetermined level between 1 and 3. Preferably, the scaling factor is fixed at 2. Alternatively, a user gain adjust input terminal 55 may be coupled to the scaling factor input terminal of multiplier 78, illustrated in phantom in Figure 4. A gain adjust signal, supplied to the gain adjust input terminal 55, under the control of a user, will adjust the scaling factor. As described above, this scaling factor may preferably be varied between 1 and 3 by a user.

This scaled high frequency portion from multiplier 78 is recombined with the low frequency portion from subtractor 72 in adder 74. The output from adder 74 is the full bandwidth reemphasized luminance signal.

Because the high frequency portion of the luminance signal was attenuated before it was folded into the low frequency portion in folding circuit 20 (of Figure 1), if the thus recorded video cassette is subsequently played back on a VCR which does not have the unfolding circuit, the artifacts caused by the presence of the high frequency portion will not be objectionable. Such a cassette is backward compatible.

The above signal recording/playback system is described in general terms. It may be implemented in analog form, either in continuous or sampled data form, or may be implemented in digital form. One skilled in the art will understand how to implement this system in any desired form.

## Claims

1. A system for reproducing a luminance signal (Y) from a medium containing a previously recorded luminance signal, said previously recorded luminance signal (Y) comprising attenuated high frequencies folded into a lower frequency portion of its spectrum, the system comprising:
means (40) for recovering said recorded luminance signal from said medium;
means (60) for unfolding said high frequency portion of said luminance signal (Y) recovered from said medium;
means (72, 76) for separating a high frequency portion of said luminance signal from a low frequency portion;
a coring circuit (73) for coring said high frequency portion; wherein said coring circuit (73) only passes signals exceeding a predetermined threshold in either signal direction; and
means (78) for boosting the level of said cored high frequency portion by a scaling factor to produce said luminance signal (Y) whereby the scaled high frequency portion, when recombined with the low frequency portion of said luminance signal (Y), produces substantially the full bandwidth re-emphasized luminance signal.

2. A reproducing system according to claim 1, wherein said separating means (72, 76) comprises:
a high pass filter (76) responsive to said recovered luminance signal to form said high frequency portion;
a subtractor (72) for subtracting said high frequency portion from said recovered luminance signal to form said low frequency portion; and
an adder (74) for adding the cored and scaled high frequency portion together with the output of said subtractor (72) for producing the full bandwidth re-emphasized luminance signal (Y).

3. A reproducing system according to claim 1 or 2 wherein:
said coring circuit (73) further comprises a threshold control input terminal and only passes signals exceeding a threshold which varies in response to a signal at said threshold control input terminal; and
said system further comprises a user threshold input terminal (65) coupled to said threshold control input terminal.

4. A reproducing system according to any of the preceding claims, wherein said boosting means (78) comprises a multiplier for multiplying said high frequency portion by said scaling factor, wherein said scaling factor is fixed at a predetermined level.

5. A reproducing system according to any of claims 1 to 3, wherein said boosting means (78) comprises a multiplier for multiplying said high frequency portion by said scaling factor and a gain adjust input terminal (55) for producing said scaling factor in response to a user input.

6. A system having a recording portion for recording a luminance signal (Y) on a recording medium and a reproducing portion for playing back said luminance signal (Y) from a recording medium, wherein said luminance signal (Y) comprises a high frequency portion which is folded back into the low frequency portion, wherein said recording portion comprises:
means (10, 80) for adaptively reducing the level of a high frequency portion of said luminance signal, whereby said adaptive reducing means reduces the level of said high frequency portion by an amount variable in response to a control signal, which control signal is responsive to the level of said high frequency portion; and
means (40) for recording said luminance signal (Y) on said medium:
and said reproducing portion comprises:
means (40) for reproducing said luminance signal from said medium; and
means (70) for non-adaptively boosting the level of said high frequency portion of said reproduced luminance signal to produce said luminance signal, whereby said non-adaptive boosting means boosts the level of said high frequency portion by a predetermined amount.

7. A system according to claim 8, wherein said reproducing portion is in accordance with any of claims 1 to 5.

8. A system according to claim 6 or 7, wherein said adaptive reducing means (10, 80) comprises:
means (82) for separating a high frequency portion from said luminance signal (Y); and
means (80) responsive to said high frequency portion, for producing said control signal only if the level of said high frequency portion exceeds a predetermined threshold level.

9. A system according to any of claims 6 to 8, wherein said adaptive reducing means (10, 80) comprises:
means (82) for separating a high frequency portion of said luminance signal (Y) from a low frequency portion;
means (84-88) for generating a control signal (K) representative of the level of said high frequency portion;
means (16) for scaling said high frequency portion by a scaling factor (1-K) related to said control signal (K); and
means (18) for combining said scaled high frequency portion and said low frequency portion to form said reduced level luminance signal.

10. A system according to claim 8 or claim 9, wherein said separating means comprises a high pass filter (82).

11. A system according to any one of claims 8 to 10, wherein said control signal producing means (80) comprises:
a rectifier (84), responsive to said high frequency portion;
a corer (86) coupled to said rectifier (84), for responding to signals exceeding said threshold level; and
a low pass filter (88), coupled to said corer (86), for producing said control signal.

12. A system according to claim 9 or to claim 10 or claim 11 as dependent from claim 8, wherein said separating means comprises:
a subtractor (12) for subtracting said high frequency portion from said luminance signal (Y) to produce said low frequency portion.

13. A system according to claim 11 or 12, wherein said scaling means comprises a multiplier (16) for multiplying said high frequency portion by said scaling factor (1-K).

14. A system according to claim 13, wherein said scaling means further comprises a function circuit (14), responsive to said control signal (K), for generating said scaling factor (1-K).

15. A system according to claim 14, wherein:
said control signal generator (84-88) produces a signal K having a value which varies from 0, when the level of said high frequency portion is relatively small, to 1/2, when the level of said high frequency portion is relatively large, and having intermediate values at intermediate levels of said high frequency portion; and
said function circuit (14) produces a scaling factor 1-K having a value which varies from 1, when the value of said control signal K is 0, to 1/2, when the value of said control signal is 1/2, and having intermediate values at intermediate values of said control signal K.

## Patentansprüche

1. Ein System zum Erzeugen eines Helligkeitssignals (Y) von einem Medium, das ein vorhergehend aufgezeichnetes Helligkeitssignal enthält, wobei das genannte vorhergehend aufgezeichnete Helligkeitssignal (Y) gedämpfte Höhen-Frequenzen umfaßt, die in einen niederfrequenten Teil seines Spektrums gefaltet sind, wobei das System umfaßt:
eine Einrichtung (40) zum Wiedergewinnen des genannten aufgezeichneten Helligkeitssignals von dem genannten Medium;
eine Einrichtung (60) zum Entfalten des genannten Höhen-Frequenzteils des genannten Helligkeitssignals (Y), das von dem genannten Medium wiedergewonnen worden ist;
eine Einrichtung (72, 76) zum Trennen eines Höhen-Frequenzteils des genannten Helligkeitssignals von einem Niedrig-Frequenzteil;
eine Trennschaltung (73) zum Trennen des genannten Höhen-Frequenzteils; wobei die genannte OTrennschaltung (73) nur Signale, die eine vorbestimmte Schwelle überschreiten, in beiden Signalrichtungen hindurchläßt; und
eine Einrichtung (78) zum Verstärken des Pegels des genannten getrennten Höhen-Frequenzteils mit einem Skalierungsfaktor, um das genannte Helligkeitssignal (Y) zu erzeugen, wodurch der skalierte Höhen-Frequenzteil, wenn er mit dem Niedrig-Frequenzteil des genannten Helligkeitssignals (Y) kombiniert wird, im wesentlichen das nachverzerrte Helligkeitssignal voller Bandbreite erzeugt.

2. Ein Wiedergabesystem gemäß Anspruch 1, in dem die genannte Trenneinrichtung (72, 76) umfaßt:
ein Hochpaßfilter (76), das auf das genannte wiedergewonnene Helligkeitssignal reagiert, um den genannten Höhen-Frequenzteil zu bilden;
eine Subtraktionseinrichtung (72) zum Subtrahieren des genannten Höhen-Frequenzteils von dem genannten wiedergewonnenen Helligkeitssignal, um den genannten Niedrig-Freuenzteil zu bilden; und
eine Addiereinrichtung (74) zum Addieren des getrennten und skalierten Höhen-Frequenzteils mit dem Ausgang der genannten Substraktionseinrichtung (72) zum Erzeugen des nachverzerrten Helligkeitssignals (Y) voller Bandbreite.

3. Ein Wiedergabesystem gemäß Anspruch 1 oder 2, in dem:
die genannte Trennschaltung (73) ferner eine Schwellenteuerungs-Eingangsklemme umfaßt und nur Signale hindurchäßt, die eine Schwelle überschreiten, die sich in Reaktion auf ein Signal an der genannten Schwellensteuerungs-Einangsklemme ändert; und
das genannte System ferner eine Benutzerschwellen-Eingangsklemme (65) umfaßt, die mit der genannten Schwellensteuerungs-Eingangsklemme gekoppelt ist.

4. Ein Wiedergabesystem gemäß irgendeinem der vorhergehenden Ansprüche, in der die genannte Verstärkungseinrichtung (78) eine Multiplikationseinrichtung zum Multiplizieren des genannten Höhen-Frequenzteils mit dem genannten Skalierungsfaktor umfaßt, wobei der genannten Skalierungsfaktor auf einen vorbestimmten Pegel festgelegt ist.

5. Ein Wiedergabesystem gemäß irgendeinem der Ansprüche 1 bis 3, in dem die genannte Verstärkungseinrichtung (78) eine Multiplikationseinrichtung zum Multiplizieren des genannten Höhen-Frequenzteils mit dem genannten Skalierungsfaktor und eine Verstärkungseinstell-Eingangsklemme (55) zum Erzeugen des genannten Skalierungsfaktors in Reaktion auf eine0n0m Benutzereingang umfaßt.

6. Ein System, da0s0ß einen Aufzeichnungsabschnitt zum Aufzeichnen eines Helligkeitssignals (Y) auf einem Aufzeichnungsmedium und einen Wiedergabeabschnitt zum Wiedergeben des genannten Helligkeitssignals (Y) von einem Aufzeichnungsmedium aufweist, wobei das genannte Helligkeitssignal (Y) einen Höhen-Frequenzteil umfaßt, der in den Niedrig-Frequenzteil zurückgefaltet ist, wobei der genannte Aufeichnungsabschnitt umfaßt:
eine Einrichtung (10, 80), um adaptiv den Pegel eines Höhen-Frequenzteils des genannten Helligkeitssignals zu verringern, wodurch die genannte adaptive Verringerungseinrichtung den Pegel des genannten Höhen-Frequenzteils um eine Größe verringert, die in Reaktion auf ein Steuersignal veränderbar ist, wobei das Steuersignal auf den Pegel des genannten Höhen-Frequenzteils reagiert; und
eine Einrichtung (40) zum Aufzeichnen des genannten Helligkeitssignals (Y) auf dem genannten Medium:
der genannte Wiedergabeabschnitt umfaßt:
eine Einrichtung (40) zum Wiedergeben des genannten Helligkeitssignals von dem genannten Medium; und
eine Einrichtung (70) zum nichtadaptiven Verstärken des Pegels des genannten Höhen-Frequenzteils des genannten wiedergegebenen Helligkeitssignals, um das genannte Helligkeitssignal zu erzeugen, wodurch die genannte nicht-adaptive Verstärkungseinrichtung den Pegel des genannten Höhen-Frequenzteils um eine vorbestimmte Größe verstärkt.

7. Ein System gemäß Anspruch 6, in dem der genannte Wiedergabeabschnitt gemäß irgendeinem der Ansprüche 1 bis 5 ist.

8. Ein System gemäß Anspruch 6 oder 7, in dem die genannte adaptive Verringerungseinrichtung (10, 80) umfaßt:
eine Einrichtung (82) zum Trennen eines Höhen-Frequenzteils von dem genannten Helligkeitssignal (Y); und
eine Einrichtung (80), die auf den genannten Höhen-Frequenzteil reagiert, um das genannte Steuersignal nur zu erzeugen, wenn der Pegel des genannten Höhen-Frequenzteils einen vorbestimmten Schwellenpegel übersteigt.

9. Ein System gemäß irgendeinem der Ansprüche 6 bis 8, in dem die genannte adaptive Verringerungseinrichtung (10,80) umfaßt:
eine Einrichtung (82) zum Trennen eines Höhen-Frequenzteils des genannten Helligkeitssignals (Y) von einem Niedrig Frequenzteil;
eine Einrichtung (84-88) zum Erzeugen eines Steuersignals (K), das für den Pegel des genannten Höhen-Frequenzteils repräsentativ ist;
eine Einrichtung (16) zum Skalieren des genannten Höhen-Frequenzteils mit einem Skalierungsfaktor (1-K), der mit dem genannten Steuersignal (K) in Beziehung steht; und
eine Einrichtung (18) zum Kombinieren des genannten skalierten Höhen-Frequenzteils und des genannten Niedrig-Frequenzteils, um das genannte Helligkeitssignal mit verringertem Pegel zu bilden.

10. Ein System gemäß Anspruch 8 oder 9, in dem die genannte Trenneinrichtung ein Hochpaßfilter (82) umfaßt.

11. Ein System gemäß irgendeinem der Ansprüche 8 bis 10, in dem die genannte Steuersignalerzeugungseinrichtung (80) umfaßt:
einen Gleichrichter (84), der auf den genannten Höhen-Frequenzteil anspricht;
eine Trenneinrichtung (86), die mit dem genannten Gleichrichter (84) gekoppelt ist, um auf Signale zu reagieren, die den genannten Schwellenpegel überschreiten; und
ein Tiefpaßfilter (88), das mit der genannten Trenneinrichtung (86) gekoppelt ist, um das genannte Steuersignal zu erzeugen.

12. Ein System gemäß Anspruch 9 oder Anspruch 10 oder Anspruch 11, wenn von Anspruch 8 abhängig, in dem die genannte Trenneinrichtung umfaßt:
eine Subtraktionseinrichtung (12) zum Subtrahieren des genannten Höhen-Frequenzteils von dem genannten Helligkeitssignal (Y), um den genannten Niedrig-Frequenzteil zu erzeugen.

13. Ein System gemäß Anspruch 11 oder 12, in dem die genannte Skalierungseinrichtung eine Multiplikationseinrichtung (16) zum Multiplizieren des genannten Höhen-Frequenzteils mit dem genannten Skalierungsfaktor (1-K) umfaßt.

14. Ein System gemäß Anspruch 13, in dem die genannte Skalierungseinrichtung ferner eine Funktionsschaltung (14) umfaßt, die auf das genannte Steuersignal (K) reagiert, um den genannten Skalierungsfaktor (1-K) zu erzeugen.

15. Ein System gemäß Anspruch 14, in dem:
der genannte Steuersignalgenerator (84-88) ein Signal (K) erzeugt, das einen Wert aufweist, der sich von 0, wenn der Pegel des genannten Höhen-Frequenzteils relativ klein ist, bis 1/2 ändert, wenn der Pegel des genannten Höhen-Frequenzteils relativ groß ist, und Zwischenwerte bei Zwischenpegeln des genannten Höhen-Frequenzteils aufweist; und
die genannte Funktionsschaltung (14) einen Skalierungsfaktor (1-K) erzeugt, der einen Wert hat, der sich von 1, wenn der Wert des genannten Steuersignals K gleich 0 ist, bis 1/2 ändert, wenn der Wert des genannten Steuersignals 1/2 ist, und Zwischenwerte bei Zwischenwerten des genannten Steuersignals (K) aufweist.

## Revendications

1. Système de reproduction d'un signal de luminance (Y) à partir d'un support contenant un signal de luminance enregistré préalablement, ledit signal de luminance (Y) enregistré préalablement comprenant des hautes fréquences atténuées repliées en une partie de fréquence plus faible de son spectre, le système comprenant :
un moyen de récupération (40) pour récupérer, à partir dudit support, ledit signal de luminance enregistré ;
un moyen de dépliage (60) pour déplier ladite partie à haute fréquence dudit signal de luminance (Y) récupérée à partir dudit support ;
un moyen de séparation (72, 76) pour séparer une partie à haute fréquence dudit signal de luminance d'une partie à basse fréquence ;
un circuit dénoyauteur (73) pour dénoyauter ladite partie à haute fréquence, ledit circuit dénoyauteur (73) laissant passer seulement les signaux dépassant un seuil prédéterminé dans l'un ou l'autre sens de signal ; et
un moyen (78) pour amplifier, par un facteur de mise à l'échelle, le niveau de ladite partie à haute fréquence dénoyautée, pour produire ledit signal de luminance (Y), ce par quoi la partie à haute fréquence mise à l'échelle, lorsqu'elle est recombinée avec la partie à basse fréquence dudit signal de luminance (Y), produit sensiblement le signal de luminance réaccentué de largeur de bande complète.

2. Système de reproduction selon la revendication 1, dans lequel ledit moyen de séparation (72, 76) comprend :
un filtre passe-haut (76) sensible audit signal de luminance récupéré pour former ladite partie à haute fréquence ;
un soustracteur (72) pour soustraire ladite partie à haute fréquence dudit signal de luminance récupéré pour former ladite partie à basse fréquence ; et
un additionneur (74) pour additionner la partie à haute fréquence dénoyautée et mise à l'échelle avec la sortie dudit soustracteur (72), pour produire le signal de luminance (Y) réaccentué à largeur de bande complète.

3. Système de reproduction selon la revendication 1 ou 2, dans lequel :
ledit circuit dénoyauteur (73) comprend en outre une borne d'entrée de commande de seuil et laisse passer seulement les signaux dépassant un seuil qui varie en réponse à un signal à ladite borne d'entrée de commande de seuil ; et
dans lequel ledit système comprend, en outre, une borne d'entrée de seuil d'utilisateur (65) raccordée à ladite borne d'entrée de commande de seuil.

4. Système de reproduction selon l'une quelconque des revendications précédentes, dans lequel ledit moyen amplificateur (78) comprend un multiplieur, pour multiplier ladite partie à haute fréquence par ledit facteur de mise à l'échelle, dans lequel ledit facteur de mise à l'échelle est fixé à un niveau prédéterminé.

5. Système de reproduction selon l'une quelconque des revendications 1 à 3, dans lequel ledit moyen amplificateur (78) comprend un multiplieur pour multiplier ladite partie à haute fréquence par ledit facteur de mise à l'échelle, et une borne d'entrée de réglage de gain (55) pour produire ledit facteur de mise à l'échelle en réponse à une entrée d'utilisateur.

6. Système comportant une partie d'enregistrement pour enregistrer un signal de luminance (Y) sur un support d'enregistrement, et une partie de reproduction pour reproduire ledit signal de luminance (Y) à partir d'un support d'enregistrement, dans lequel ledit signal de luminance (Y) comprend une partie à haute fréquence qui est repliée dans la partie à basse fréquence, ladite partie d'enregistrement comprenant :
un moyen de réduction adaptative (10, 80) pour réduire de façon adaptative le niveau d'une partie à haute fréquence dudit signal de luminance, ce par quoi ledit moyen de réduction adaptative réduit le niveau de ladite partie à haute fréquence d'une valeur variable en réponse à un signal de commande, lequel signal de commande est sensible au niveau de ladite partie à haute fréquence ; et
un moyen d'enregistrement (40) pour enregistrer ledit signal de luminance (Y) sur ledit support ;
et dans lequel ladite partie de reproduction comprend :
un moyen de reproduction (40) pour reproduire ledit signal de luminance à partir dudit support ; et
un moyen d'amplification non adaptative (70) pour amplifier de façon non adaptative le niveau de ladite partie à haute fréquence dudit signal de luminance reproduit, pour produire ledit signal de luminance, ce par quoi ledit moyen d'amplification non adaptative amplifie le niveau de ladite partie à haute fréquence d'une valeur prédéterminée.

7. Système selon la revendication 8, dans lequel ladite partie de reproduction est conforme à l'une quelconque des revendications 1 à 5.

8. Système selon la revendication 6 ou 7, dans lequel ledit moyen de réduction adaptative (10, 80) comprend :
un moyen (82) pour séparer une partie à haute fréquence dudit signal de luminance (Y) ; et
un moyen (80) sensible à ladite partie à haute fréquence, pour produire ledit signal de commande seulement si le niveau de ladite partie à haute fréquence dépasse un niveau de seuil prédéterminé.

9. Système selon l'une quelconque des revendications 6 à 8, dans lequel ledit moyen de réduction adaptative (10, 80) comprend :
un moyen (82) pour séparer une partie à haute fréquence dudit signal de luminance (Y) d'une partie à basse fréquence;
un moyen (84 à 88) pour produire un signal de commande (K) représentatif du niveau de ladite partie à haute fréquence ;
un moyen (16) pour mettre à l'échelle ladite partie à haute fréquence à l'aide d'un facteur de mise à l'échelle (1-K) lié audit signal de commande (K) ; et
un moyen (18) pour combiner ladite partie à haute fréquence mise à l'échelle et ladite partie à basse fréquence pour former ledit signal de luminance de niveau réduit.

10. Système selon la revendication 9 ou la revendication 10, dans lequel ledit moyen séparateur comprend un filtre passe-haut (82).

11. Système selon l'une quelconque des revendications 8 à 10, dans lequel ledit moyen de reproduction de signal de commande (80) comprend :
un redresseur (84) sensible à ladite partie à haute fréquence ;
un dénoyauteur (86) raccordé audit redresseur (84) pour réagir à des signaux dépassant ledit niveau de seuil ; et
un filtre passe-bas (88) raccordé audit dénoyauteur (86) pour produire ledit signal de commande.

12. Système selon la revendication 9 ou la revendication 10 ou la revendication 11 lorsqu'elle dépend de la revendication 8, dans lequel ledit moyen séparateur comprend :
un soustracteur (12) pour soustraire, dudit signal de luminance (Y), ladite partie à haute fréquence, pour produire ladite partie à basse fréquence.

13. Système selon la revendication 11 ou 12, dans lequel ledit moyen de mise à l'échelle comprend un multiplieur (16) pour multiplier ladite partie à haute fréquence par ledit facteur de mise à l'échelle (1-K).

14. Système selon la revendication 13, dans lequel ledit moyen de mise à l'échelle comprend, en outre un circuit de fonction (14), sensible audit signal de commande (K), pour produire ledit facteur de mise à l'échelle (1-K).

15. Système selon la revendication 14, dans lequel :
ledit générateur de signal de commande (84 à 88) produit un signal K ayant une valeur qui varie de 0, lorsque le niveau de ladite partie à haute fréquence est relativement petit, à 1/2, lorsque le niveau de ladite partie à haute fréquence est relativement grand, et ayant des valeurs intermédiaires aux niveaux intermédiaires de ladite partie à haute fréquence ; et dans lequel :
ledit circuit de fonction (14) produit un facteur de mise à l'échelle 1-K ayant une valeur qui varie de 1, lorsque la valeur dudit signal de commande K est 0, à 1/2, lorsque la valeur dudit signal de commande est 1/2, et ayant des valeurs intermédiaires aux valeurs intermédiaires dudit signal de commande K.
